# EUROPEAN PATENT APPLICATION

(11) **EP 4 057 678 A1**
(43) Date of publication of application: **14.09.2022**
(21) Application number: 19951726.9
(22) Date of filing: 06.11.2019
(51) Int. Cl.: H04W 24/10, H04W 72/04, H04W 48/18

(54) **RADIO BASE STATION AND TERMINAL**

(71) Applicant: NTT DOCOMO, INC., Chiyoda-Ku Tokyo 100-6150 (JP)
(72) Inventor: TOEDA, Teruaki, Tokyo 100-6150 (JP); MIN, Tianyang, Tokyo 100-6150 (JP); UMESH, Anil, Tokyo 100-6150 (JP)
(74) Representative: Hoffmann Eitle
(86) International application number: PCT/JP2019/043556
(87) International publication number: WO 2021/090419

(57) **Abstract**

An eNB (100A) performs dual connectivity with a UE (200). The eNB (100A) receives a report that the UE (200) has from the UE (200) during the dual connectivity, and transmits, to the UE (200), a message including designation information that designates at least one of a first radio access technology or a second radio access technology as a transmission target of the report.

## Description

### Technical Field

The present invention relates to a radio base station and a terminal, and more particularly, to a radio base station and a terminal that perform dual connectivity.

### Background Art

The 3rd Generation Partnership Project (3GPP) specifies Long Term Evolution (LTE), and specification of LTE-Advanced (hereinafter, collectively referred to as LTE including the LTE-Advanced) for the purpose of further increasing the speed of LTE and specification of 5th generation mobile communication system (which is also called 5G, New Radio (NR), or Next Generation (NG)) have been conducted.

Further, in the 3GPP (specifically, RAN2), Minimization of Drive Test (MDT), in which Quality of Experience (QoE) is collected in a manner in which a terminal (User Equipment (UE)) notifies a network of an event (radio disconnection during communication, a handover failure, or the like) related to the QoE in the terminal, has been under study by focusing on a relationship with Radio Resource Management (RRM) measurements (Non Patent Literature 1).

Furthermore, in the 3GPP, the MDT in dual connectivity such as E-UTRA-NR Dual Connectivity (EN-DC) has also been studied (Non Patent Literature 2). In addition, in a case of using the LTE alone, rather than the dual connectivity, a method of transmitting various reports including the MDT are specified (Non Patent Literature 3).

### Citation List

### Non Patent Literature

Non Patent Literature 1: "Study on RAN-centric data collection and utilization for LTE and NR", RP-182105, 3GPP TSG RAN Meeting #81, 3GPP, September 2018.
Non Patent Literature 2: 3GPP TR 37.816 V16.0.0, 3rd Generation Partnership Project; Technical Specification Group Radio Access Network; Study on RAN-centric data collection and utilization for LTE and NR (Release 16), 3GPP, July 2019
Non Patent Literature 3: 3GPP TS 36.331 V15.6.0, 3rd Generation Partnership Project; Technical Specification Group Radio Access Network; Evolved Universal Terrestrial Radio Access (E-UTRA); Radio Resource Control (RRC); Protocol specification (Release 15), 3GPP, June 2019

### Summary of Invention

However, in the dual connectivity involving a plurality of radio base stations, for example, when a radio link failure (RLF) occurs, the terminal cannot properly determine how to transmit a report such as the MDT to the network.

In this regard, the present invention has been made in view of such a situation, and an object of the present invention is to provide a radio base station and a terminal which enable the network to appropriately acquire a report such as the MDT even when a radio link failure (RLF) occurs.

An aspect of the present disclosure is a radio base station (eNB 100A) including: a control unit (control unit 150) that performs dual connectivity with a terminal (UE 200) that supports a first radio access technology and a second radio access technology; a receiving unit (radio receiving unit 120) that receives a report that the terminal has from the terminal during the dual connectivity; and a transmitting unit (radio transmitting unit 110) that transmits, to the terminal, a message including designation information that designates at least one of the first radio access technology or the second radio access technology as a transmission target of the report.

An aspect of the present disclosure is a terminal (UE 200) including: a control unit (control unit 250) that performs dual connectivity with a radio base station (eNB 100A) by using a first radio access technology and a second radio access technology; and a transmitting unit (radio transmitting unit 210) that transmits, to at least one of the radio base station or another radio base station that performs the dual connectivity, type information indicating to which one of the first radio access technology or the second radio access technology a report that the terminal has is related.

### Brief Description of Drawings

Fig. 1 is an overall schematic configuration diagram of a radio communication system 10.
Fig. 2 is a functional block configuration diagram of an eNB 100A.
Fig. 3 is a functional block configuration diagram of a gNB 100B.
Fig. 4 is a functional block configuration diagram of a UE 200.
Fig. 5 is a diagram illustrating a communication sequence related to various reports including MDT.
Fig. 6 is a diagram illustrating an example of an MDT report transmission sequence when a failure (RLF) occurs in a radio link (for example, DL) in the UE 200 connected only to LTE.
Fig. 7 is a diagram illustrating an example of an MDT report transmission sequence when a radio link failure (RLF) occurs in dual connectivity.
Fig. 8 is a diagram illustrating an example of a hardware configuration of the eNB 100A, the gNB 100B, and the UE 200.

### Description of Embodiments

Hereinafter, embodiments will be described with reference to the drawings. Note that the same functions or configurations are denoted by the same or similar reference numerals, and description thereof is omitted as appropriate.

### (1) Overall Schematic Configuration of Radio Communication System

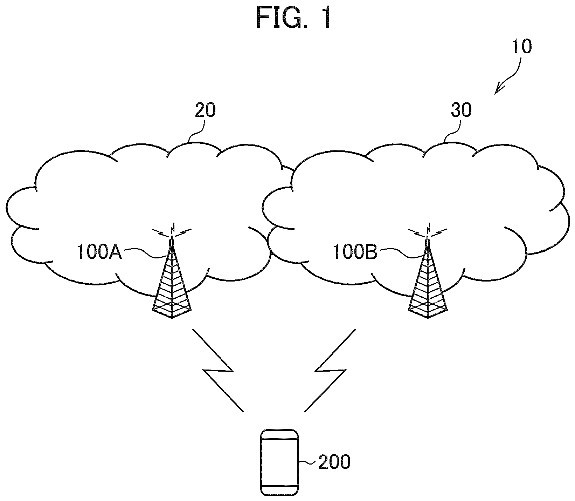

Fig. 1 is a diagram illustrating an overall schematic configuration of a radio communication system 10 according to the present embodiment. The radio communication system 10 is a radio communication system according to Long Term Evolution (LTE) and 5G New Radio (NR). Note that the LTE may also be referred to as 4G, and NR may also be referred to as 5G.

Further, the LTE and the NR may be interpreted as radio access technologies (RAT), and in the present embodiment, the LTE may also be called a first radio access technology and the NR may also be called a second radio access technology.

The radio communication system 10 includes an Evolved Universal Terrestrial Radio Access Network 20 (hereinafter, referred to as E-UTRAN 20) and a Next Generation-Radio Access Network 30 (hereinafter, referred to as NG RAN 30). Further, the radio communication system 10 also includes a terminal 200 (hereinafter, referred to as user equipment (UE) 200).

The E-UTRAN 20 includes an eNB 100A that is a radio base station according to the LTE. The NG RAN 30 includes a gNB 100B that is a radio base station according to the 5G (NR). Note that the E-UTRAN 20 and the NG RAN 30 (or the eNB 100A or the gNB 100B) may be simply referred to as a network.

The eNB 100A, the gNB 100B, and the UE 200 can support Carrier Aggregation (CA) using a plurality of Component Carriers (CC), Dual Connectivity (DC) in which component carriers are simultaneously transmitted between a plurality of NG-RAN nodes and the UE, and the like.

The eNB 100A, the gNB 100B, and the UE 200 perform radio communication by using a radio bearer, specifically, an SRB Signalling Radio Bearer (SRB) or a DRB Data Radio Bearer (DRB).

In the present embodiment, Multi-Radio Dual Connectivity (MR-DC) in which the eNB 100A constitutes a Master Node (MN) and the gNB 100B constitutes a Secondary Node (SN), specifically, E-UTRA-NR Dual Connectivity (EN-DC), is performed.

That is, the UE 200 supports dual connectivity in which the UE 200 is connected to the eNB 100A and the gNB 100B.

The eNB 100A is included in a Master Cell Group (MCG), and the gNB 100B is included in a Secondary Cell Group (SCG). That is, the gNB 100B is an SN included in the SCG.

Further, the UE 200 can perform Minimization of Drive Test (MDT) in which Quality of Experience (QoE) is collected.

The MDT is a technology standardized by the 3GPP, in which the QoE is collected in a manner in which the UE 200 notifies the network of information on a location where an event such as radio disconnection during communication or a handover failure occurs, a cause of the event, and the like. That is, the MDT is a mechanism in which the network collects a QoE measurement result from the UE 200.

Note that the MDT is a substitute for a test in which a vehicle is driven, and various performances (cell power, interference, and the like) of the network or performances (a call drop, a throughput, a handover, and the like) of the UE 200 are measured, and the UE 200 collects many protocol logs and the like. As the term "MDT" implies, the MDT is a mechanism that assists in minimization of this kind of drive test.

### (2) Functional Block Configuration of Radio Communication System

Next, a functional block configuration of the radio communication system 10 will be described. Specifically, a functional block configuration of each of the eNB 100A, the gNB 100B, and the UE 200 will be described. Note that, in the description of the functional block configuration, an outline of the function of each device will be described, and then details of operation of each device will be described later.

### (2.1) eNB 100A

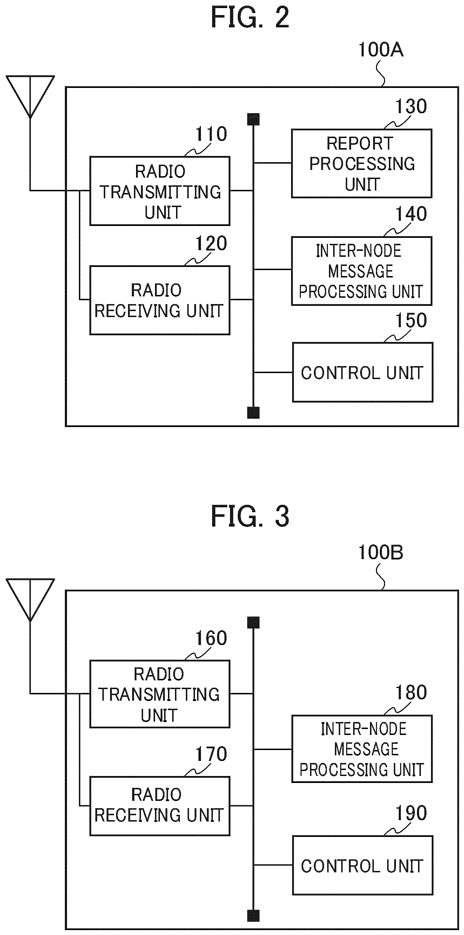

Fig. 2 is a functional block configuration diagram of the eNB 100A. As illustrated in Fig. 2, the eNB 100A includes a radio transmitting unit 110, a radio receiving unit 120, a report processing unit 130, an inter-node message processing unit 140, and a control unit 150.

The radio transmitting unit 110 transmits a downlink signal (DL signal) according to the LTE. The radio receiving unit 120 receives an uplink signal (UL signal) according to the LTE.

Particularly, in the present embodiment, the radio transmitting unit 110 constitutes a transmitting unit that transmits, to the UE 200, a message including designation information that designates at least one of the LTE and the NR as a transmission target of a report that the UE 200 has. In addition, in the present embodiment, the radio receiving unit 120 constitutes a receiving unit that receives, from the terminal UE 200, a report that the UE 200 has during the dual connectivity.

Note that the report that the UE 200 has is typically related to the MDT, but is not necessarily limited thereto. As described later, the report may include a random access channel (RACH), a radio link failure (RLF), an MDT (logMeasReport), and a connection establishment failure (connEstFailReport) transmitted from the UE 200.

Further, the MDT is not limited to a logged MDT measurement report (logMeasReport), and may be logMeasAvailableBT (Bluetooth (registered trademark)), logMeasAvailableWLAN, or the like that indicates that a MDT report is included. Note that details of a report as a target will be described later.

The radio receiving unit 120 can receive, from the UE 200, type information (which may also be referred to as RAT type) indicating to which one of the LTE or the NR the report is related. Furthermore, the radio receiving unit 120 can also receive, from the gNB 100B, bearer information indicating a radio bearer (specifically, SRB) to be used for forwarding of a report from the eNB 100A to the gNB 100B.

The radio transmitting unit 110 can transmit, to the gNB 100B (another radio base station) that performs the dual connectivity, availability information (loggedMeasAailableNR) indicating that the UE 200 has a report related to the NR.

Furthermore, the radio transmitting unit 110 can transmit, to the gNB 100B, a target report by using a radio bearer determined based on the bearer information received from the gNB 100B, specifically, SRB1 or SRB3.

The report processing unit 130 performs processing relating to various reports including the MDT. Specifically, the report processing unit 130 acquires the random access channel (RACH), the radio link failure (RLF), the MDT (logMeasReport), and the connection establishment failure (connEstFailReport) transmitted from the UE 200.

Note that the MDT includes logged MDT measurement performed by the UE 200 in an idle state in a radio resource control layer (RRC) and immediate MDT performed by the UE 200 in a connected state, but in the present embodiment, the logged MDT measurement may be assumed. However, the immediate MDT may also become a target.

The inter-node message processing unit 140 performs processing of various messages between the eNB 100A (MN) and the gNB 100B (SN). Specifically, the inter-node message processing unit 140 transmits, to the gNB 100B, a message such as SgNBmodificationRequest, SgNBReleaseRequest, or SgNBAdditionRequest. Further, the inter-node message processing unit 140 receives, from the gNB 100B, a response message such as SgNBmodificationRequestAck, SgNBReleaseRequestAck, or SgNBAdditionRequestAck.

Note that an inter-node message is not limited to these messages, and may include, for example, SgNB release required, SgNB addition request, or the like. Details of the inter-node message will be further described later.

The control unit 150 controls each functional block included in the eNB 100A. Particularly, in the present embodiment, the control unit 150 performs the dual connectivity with the UE 200 that supports the LTE and the NR.

Specifically, the control unit 150 configures radio bearers with the UE 200 and performs dual connectivity of the UE 200 to the LTE and the NR in cooperation with the gNB 100B. Note that, in the present embodiment, E-UTRA-NR Dual Connectivity (EN-DC) is described as an example, but the type of dual connectivity is not particularly limited to the EN-DC. It is sufficient that the dual connectivity is Multi-RAT Dual Connectivity (MR -DC), and the dual connectivity may include NR-E-UTRA Dual Connectivity (NE-DC), NG-E-UTRA NR Dual Connectivity (NG-EN-DC), and NR-NR Dual Connectivity (NR-DC).

Further, the radio bearers configured together with the UE 200 may include Signalling Radio Bearers (SRBs) and Data Radio Bearers (DRBs). Further, the SRBs may include SRB0, SRB1, SRB2, and SRB3.

Note that SRB0, SRB1, SRB2, and SRB3 may be defined as follows.

- SRB0: A radio bearer for an RRC message, which uses a Common Control Channel (CCCH) logical channel.
- SRB1: A radio bearer for an RRC message (that may include a piggybacked NAS message) and an NAS message before establishment of SRB2, which uses a Dedicated Control Channel (DCCH) logical channel.
- SRB2: A radio bearer for an NAS message, which uses all DCCH logical channels. SRB2 has a lower priority than SRB1 and is configured by the network always after security is activated.
- SRB3: A radio bearer for a specific RRC message in a state in which the UE 200 performs the MR-DC, which uses a DCCH logical channel.

### (2.2) gNB 100B

Fig. 3 is a diagram illustrating a functional block configuration of the gNB 100B. As illustrated in Fig. 3, the gNB 100B includes a radio transmitting unit 160, a radio receiving unit 170, an inter-node message processing unit 180, and a control unit 190. Note that, hereinafter, a description of the same parts as those of the eNB 100A will be appropriately omitted.

The radio transmitting unit 160 transmits a downlink signal (DL signal) according to the NR. The radio receiving unit 170 receives an uplink signal (UL signal) according to the NR.

The inter-node message processing unit 180 performs processing of various messages between the eNB 100A (MN) and the gNB 100B (SN). Specifically, the inter-node message processing unit 180 receives, from the gNB 100B, a message such as SgNBmodificationRequest, SgNBReleaseRequest, or SgNBAdditionRequest. Further, the inter-node message processing unit 180 transmits, to the eNB 100A, a response message such as SgNBmodificationRequestAck, SgNBReleaseRequestAck, or SgNBAdditionRequestAck.

The control unit 190 controls each functional block included in the gNB 100B. Particularly, in the present embodiment, the control unit 190 performs the dual connectivity with the UE 200 that supports the LTE and the NR. The control unit 190 configures radio bearers with the UE 200 and performs dual connectivity of the UE 200 to the LTE and the NR in cooperation with the eNB 100A.

### (2.3) UE200

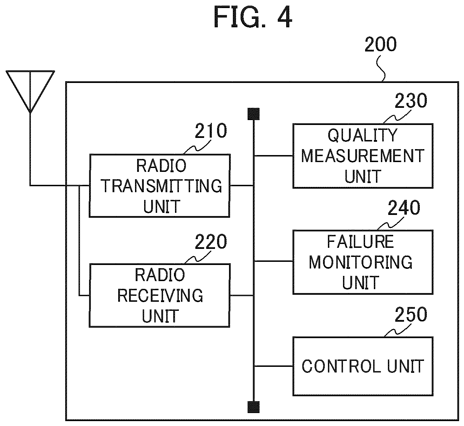

Fig. 4 is a functional block configuration diagram of the UE 200. As illustrated in Fig. 4, the UE 200 includes a radio transmitting unit 210, a radio receiving unit 220, a quality measurement unit 230, a failure monitoring unit 240, and a control unit 250.

The radio transmitting unit 210 transmits an uplink signal (UL signal) according to the LTE or the NR. The radio receiving unit 220 receives a downlink signal (DL signal) according to the LTE or the NR.

Particularly, in the present embodiment, the radio transmitting unit 210 constitutes a transmitting unit that transmits, to at least one of the eNB 100B or the gNB 100B that performs the dual connectivity with the UE 200, the type information indicating to which one of the LTE or the NR the report that the UE 200 has is related.

Specifically, the radio transmitting unit 210 can transmit, to the eNB 100A or the gNB 100B, a message including the type information (RAT type: LTE or NR or both) indicating that the UE 200 has a report for the LTE, the NR, or both of the LTE and the NR.

The quality measurement unit 230 performs measurement of a quality of the UL signal and the DL signal transmitted/received by the UE 200. Particularly, in the present embodiment, the quality measurement unit 230 acquires MDT-based measurement (which may also be referred to as QoE collection), a quality related to the RACH, a result of a random access procedure, and the like.

The failure monitoring unit 240 monitors a failure related to the UL signal and the DL signal transmitted/received by the UE 200. Specifically, the failure monitoring unit 240 monitors the presence or absence of a failure (RLF) in a radio link (for example, DL) set with the eNB 100A or the gNB 100B, an SCG failure, and a connection establishment failure.

The control unit 250 controls each functional block included in the UE 200. Particularly, in the present embodiment, the control unit 250 performs the dual connectivity with the eNB 100A and the gNB 100B by using the LTE (first radio access technology) and the NR (second radio access technology).

Note that, as described above, the dual connectivity is not limited to the EN-DC, but may be the MR-DC.

### (3) Operations of Radio Communication System

Next, operations of the radio communication system 10 will be described. Specifically, operations related to transmission of various reports including the MDT will be described.

### (3.1) Communication Sequence Related to Various Reports Including MDT

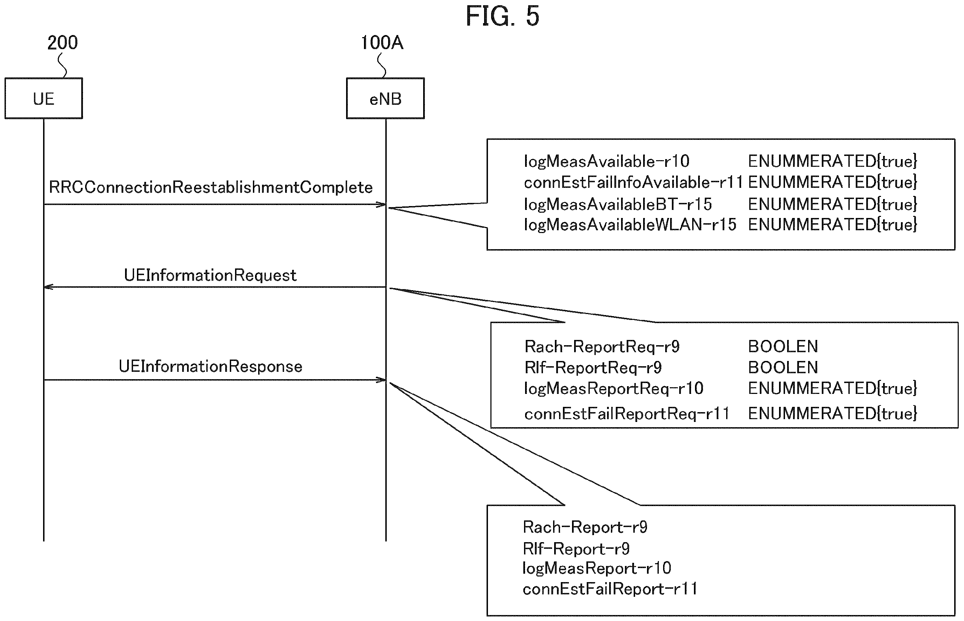

Fig. 5 illustrates a communication sequence related to various reports including the MDT. Specifically, Fig. 5 illustrates a communication sequence related to reports such as the MDT, the RACH, the RLF, and the connection establishment failure (connEstFail) in the LTE.

As illustrated in Fig. 5, the UE 200 can include, in RRCConnectionReestablishmentComplete to be transmitted to the eNB 100A, information (field) indicating that the UE 200 has a corresponding report. Specifically, the UE 200 can include logMeasAvailable-r10, connEstFailInfoAvailable-r11, logMeasAvailableBT (Bluetooth (registered trademark))-r15, and logMeasAvailableWLAN-r15.

The eNB 100A can include, in UEInformationRequest to be transmitted to the UE 200, a request for a specific report based on the information received from the UE 200, the information indicating that the UE 200 has the report.

The UE 200 transmits UEInformationResponse including the requested report to the eNB 100A based on the request included in the received UEInformationRequest.

Note that, for the MDT for dual connectivity (DC), the following contents have been agreed (see clause 5.7.3.5 in 3GPP TR 37.816 V16.0.0).

- Immediate MDT configurations are supported for DC scenario.
- Logged MDT measurement can be acquired from the SN in DC scenario.
- The existing MDT framework is a base line for SCG cells related to the MDT configuration.
- The triggers for MDT measurements associated with the MCG and the SCG are separate.
- MN-SN coordination is required for MDT measurements' configuration and reporting in DC framework.
- If SRB3 is not configured, an SN-related measurement value is transmitted from the UE to the MN via SRB1 or SRB2 and then forwarded to the SN.
- If SRB3 is configured, an MN-related measurement value is transmitted to the MN via SRB1 or SRB2 and an SN-related measurement value is transmitted to the SN via SRB3.

### (3.2) Report Transmission Sequence When Radio Link Failure (RLF) Occurs

Next, an example of a report transmission sequence when a radio link failure (RLF) occurs will be described.

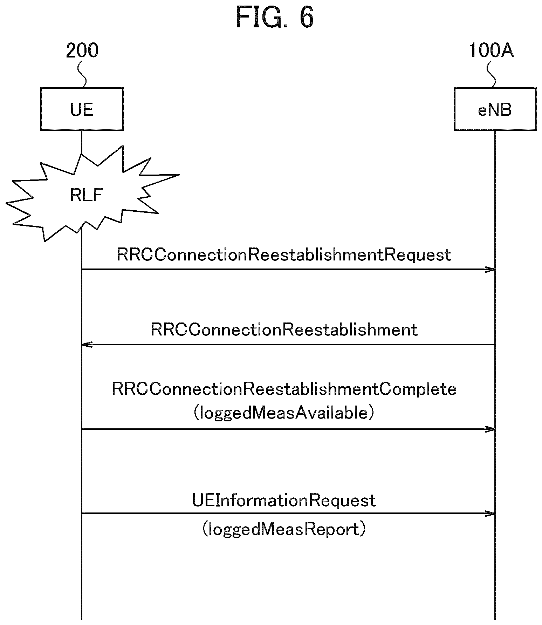

Fig. 6 illustrates an example of an MDT report transmission sequence when a failure (RLF) occurs in a radio link (for example, DL) in the UE 200 that is connected only to the LTE and does not perform the dual connectivity.

As illustrated in Fig. 6, once the RLF is detected, the UE 200 transmits RRCConnectionReestablishmentRequest to the eNB 100A, and the eNB 100A returns RRCConnectionReestablishment.

The UE 200 can include, in RRCConnectionReestablishmentComplete to be transmitted to the eNB 100A, the availability information (loggedMeasAailable) indicating that the UE 200 has an MDT report according to the received RRCConnectionReestablishment.

Further, as illustrated in Fig. 5 as well, the UE 200 transmits UEInformationResponse including the requested MDT report to the eNB 100A based on the request included in the received UEInformationRequest.

As such, in a case where the dual connectivity is not performed, the UE 200 can transmit the MDT report in accordance with the occurrence of the RLF. However, in a case where the RLF occurs during the dual connectivity, the UE 200 cannot determine a transmission destination of the MDT report and an opportunity for the transmission.

Therefore, in the present embodiment, the network acquires the MDT report for the LTE or the NR by using any of the following methods.

- (Method 1): Each RAT (network) acquires a logged MDT measurement report of its own RAT (LTE or NR) (by using SRB1 for the LTE and using SRB3 for the NR)
- (Method 2): LTE collectively acquires logged MDT measurement reports of the LTE (MN) and the NR (SN).

Note that in a case of the NE-DC, since SRB3 is not configured, only Method 2 is applicable.

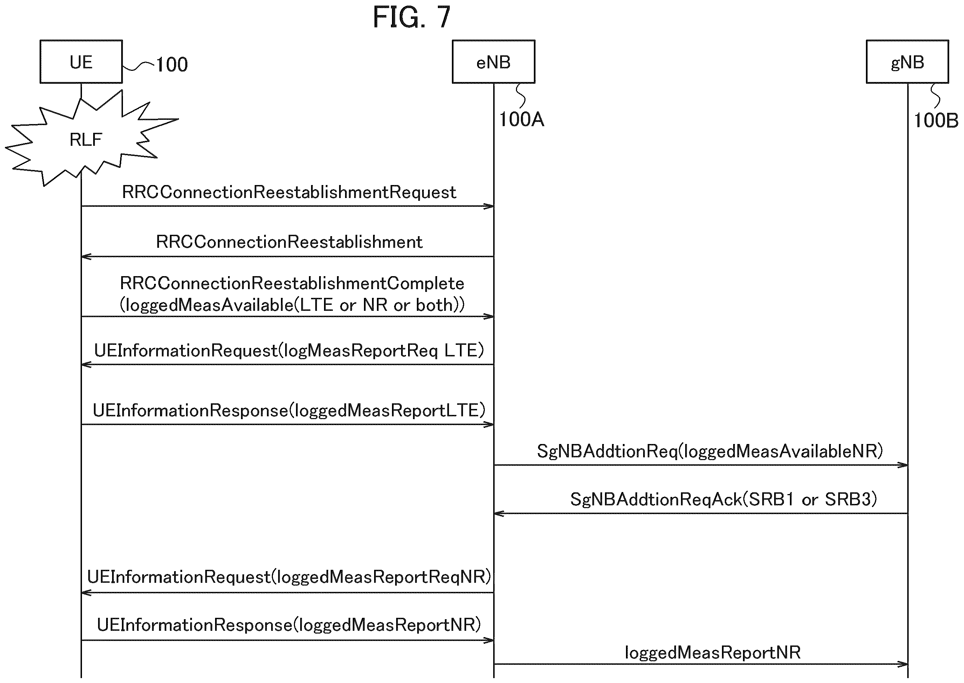

Fig. 7 illustrates an example of an MDT report transmission sequence when a radio link failure (RLF) occurs in the dual connectivity.

As illustrated in Fig. 7, when the UE 200 includes loggedMeasAailable in RRCConnectionReestablishmentComplete, it is preferable to further display RAT type information, specifically, the RAT type (LTE or NR or both).

When the UE 200 has MDT reports for both the LTE and the NR, the eNB 100A includes, in the UEInformationRequest, the designation information (LTE or NR or both) that designates at least one of the LTE or the NR as a transmission target of the reports.

Here, in a case of (Method 1), the eNB 100A designates only the LTE (loggedMeasReportReqLTE in the figure). On the other hand, in a case of (Method 2), the eNB 100A designates the LTE and the NR.

In this case, the UE 200 may include the MDT reports (loggedMeasReport) of the LTE and the NR in UEInformationResponse and transmit UEInformationResponse including the MDT reports to the eNB 100A, or may include an LTE side- or NR side-UEInformationResponse/UL DCCH message in loggedMeasReportNR, which is the MDT report for the NR, as a container. Alternatively, the UE 200 may separately transmit loggedMeasReporNR after transmitting loggedMeasReportLTE. That is, the UE 200 may transmit loggedMeasReport in two parts (or a plurality of parts). Further, loggedMeasReporNR may be transmitted before loggedMeasReportLTE.

Moreover, as illustrated in Fig. 7, the eNB 100A can transmit, to the gNB 100B, SgNBAdditionRequest including loggedMeasAailableNR.

The gNB 100B may determine whether or not to use SRB1 or SRB3 to acquire the MDT report for the NR based on whether or not SRB3 is available. Note that the eNB 100A (MN) may make this determination.

The gNB 100B includes, in SgNBAdditionRequestAck, information (SRB 1 or SRB 3) indicating which SRB is to be used.

In a case of using SRB3, the gNB 100B may directly transmit UEInformationRequest to the UE 200. In this case, the UE 200 may return, to the gNB 100B, UEInformationResponse including loggedMeasReportNR.

On the other hand, in a case of using SRB1, as illustrated in Fig. 7, the eNB 100A transmits, to the UE 200, UEInformationRequest including loggedMeasReportReqNR. In this case, the UE 200 returns, to the eNB 100A, UEInformationResponse including loggedMeasReportNR. Thereafter, the eNB 100A forwards loggedMeasReportNR to the gNB 100B. Specifically, the eNB 100A transmits, to the gNB 100B, SgNBmodificationRequest including loggedMeasReportNR, or RRC Transfer.

### (4) Actions/Effects

According to the above-described embodiment, the following actions and effects can be obtained. Specifically, the eNB 100A receives, from the UE 200, a report that the UE 200 has, such as the MDT, during the dual connectivity. Here, the eNB 100A can transmit, to the UE 200, a message (for example, UEInformationRequest) including the designation information (LTE or NR or both) that designates at least one of the LTE or the NR as a transmission target of the report.

Therefore, in the dual connectivity, even when the radio link failure (RLF) or the like occurs, the UE 200 can properly determine how to transmit a report such as the MDT to the network. As a result, the network can properly acquire a report such as the MDT even when the RLF or the like occurs.

In the present embodiment, the eNB 100A can receive, from the UE 200, the type information (RAT type) indicating to which one of the LTE or the NR the report is related, and can determine an RAT to which the report is to be transmitted based on the type information. Therefore, the network can request flexible report transmission according to an available report, and can appropriately and quickly acquire the report such as MDT.

In the present embodiment, the eNB 100A can transmit, to the gNB 100B that performs the dual connectivity with the UE 200, the availability information (loggedMeasAailable) indicating that the UE 200 has a report related to the NR.

Therefore, the NR-side network including the gNB 100B can reliably acquire only the report related to the NR.

In the present embodiment, the eNB 100A can receive, from the gNB 100B, the bearer information indicating a radio bearer (specifically, SRB) to be used for forwarding of the report from the eNB 100A to the gNB 100B, and can transmit the report to the gNB 100B by using the radio bearer determined based on the bearer information.

Therefore, even in a case of using SRB1 or the like, the report can be forwarded to the gNB 100B. As a result, the NR-side network including the gNB 100B can more reliably acquire the report related to the NR.

### (5) Other Embodiments

Although the contents of the present invention have been described above with reference to the embodiment, the present invention is not limited to these descriptions, and it is obvious to those skilled in the art that various modifications and improvements can be made.

For example, in the above-described embodiment, an example of the MDT report (loggedMeasReport) has been described, but the same operation may be applied to the following reports other than the MDT.

- RLF report (radio link failure)
- RACH report (random access channel)
- ConnectionEstablishmentFailureReport (ConnEstFailReport) (connection establishment failure)
- LogMeasAvailableBT (Bluetooth (registered trademark))
- logMeasAvailableWLAN

In the above-described embodiment, a case where a radio link failure (RLF) occurs during the dual connectivity has been described as an example, but the transmission sequence for the report such as the MDT described above is not necessarily limited to the case where the RLF occurs. The report transmission sequence is not limited to the RLF, and may be similarly applied when an event that requires reestablishment or change of RRC layer connection occurs during the dual connectivity.

In the above-described embodiment, the gNB 100B uses SRB1 or SRB3 for acquisition (forwarding) of the report, but other SRBs, specifically, SRB2, may also be used.

Moreover, the block diagrams (Figs. 2 to 4) used for describing the embodiments illustrate blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly (for example, wiredly or wirelessly) connected to each other, and each functional block may be realized by these plural devices. The functional blocks may be realized by combining software with the one device or the plural devices mentioned above.

Functions include determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

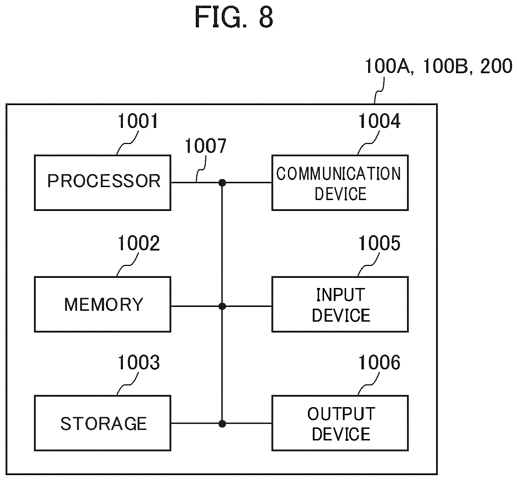

Furthermore, the eNB 100A, the gNB 100B, and the UE 200 (the device) described above may function as a computer that performs the processing of the radio communication method of the present disclosure. Fig. 8 is a diagram illustrating an example of a hardware configuration of the device. As illustrated in Fig. 8, the device may be configured as a computer device including a processor 1001, a memory 1002, a storage 1003, a communication device 1004, an input device 1005, an output device 1006, a bus 1007, and the like.

Furthermore, in the following description, the term "device" can be replaced with a term such as "circuit", "device", or "unit". A hardware configuration of the device may be constituted by including one or plurality of the devices illustrated in the figure, or may be constituted without including some of the devices.

Each functional block (Figs. 2 to 4) of the device is realized by any of hardware elements of the computer device or a desired combination of the hardware elements.

Moreover, the processor 1001 performs operation by loading predetermined software (program) on hardware such as the processor 1001 and the memory 1002, controls communication via the communication device 1004, and controls reading and/or writing of data on the memory 1002 and the storage 1003, thereby realizing various functions of the device.

The processor 1001, for example, operates an operating system to control the entire computer. The processor 1001 may be configured with a central processing unit (CPU) including an interface with a peripheral device, a control device, an operation device, a register, and the like.

Moreover, the processor 1001 reads a program (program code), a software module, data, and the like from the storage 1003 and/or the communication device 1004 into the memory 1002, and performs various processing according to the data. As the program, a program that is capable of executing on the computer at least a part of the operation described in the above embodiments is used. Alternatively, various processing described above may be performed by one processor 1001 or may be performed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 may be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, or a Blu-ray (Registered Trademark) disk), a smart card, a flash memory (for example, a card, a stick, or a key drive), a floppy (Registered Trademark) disk, a magnetic strip, and the like. The storage 1003 may be called an auxiliary storage device. The recording medium may be, for example, a database including the memory 1002 and/or the storage 1003, a server, or other appropriate media.

The communication device 1004 is hardware (transmission/reception device) capable of performing communication between computers via a wired and/or wireless network. The communication device 1004 is also called, for example, a network device, a network controller, a network card, a communication module, or the like.

The communication device 1004 may include a radiofrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these kinds of hardware.

Notification of information is not limited to that described in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB) and System Information Block (SIB)), other signals, or a combination thereof. The RRC signaling may be called RRC message, and may be, for example, an RRC Connection Setup message or an RRC Connection Reconfiguration message.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal can be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other names, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote sources by using at least one of a wired technology (coaxial cable, optical fiber cable, twisted pair, Digital Subscriber Line (DSL), or the like) and a wireless technology (infrared light, microwave, or the like), at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure are used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of a base station and/or a base station subsystem that performs the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable terms.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter, the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured with one or more frames in time domain. Each of one or more frames in the time domain may also be referred to as a subframe.

The subframe may be configured with one or more slots in the time domain. The subframe may be a fixed time length (for example, 1 ms) that does not depend on numerology.

The numerology may be a communication parameter applied to at least one of transmission or reception of a certain signal or channel. The numerology may represent, for example, at least one of a subcarrier spacing (SCS), a bandwidth, a symbol length, a cyclic prefix length, a Transmission Time Interval (TTI), the number of symbols per TTI, a radio frame configuration, specific filtering processing performed by a transceiver in frequency domain, or specific windowing processing performed by the transceiver in the time domain.

The slot may be configured with one or more symbols (Orthogonal Frequency Division Multiplexing (OFDM) symbols, Single Carrier Frequency Division Multiple Access (SC-FDMA) symbols, and the like) in the time domain. The slot may be a unit of time based on the numerology.

The slot may include a plurality of minislots. Each minislot may be configured with one or more symbols in the time domain. Further, the minislot may also be called a subslot. The minislot may be configured with fewer symbols than those of slots. A PDSCH (or PUSCH) transmitted in a time unit larger than the minislot may be called a PDSCH (or PUSCH) mapping type A. A PDSCH (or PUSCH) transmitted using the minislot may be called a PDSCH (or PUSCH) mapping type B.

Each of the radio frame, subframe, slot, minislot, and symbol represents a time unit for transmitting a signal. Different names may be used for the radio frame, subframe, slot, minislot, and symbol, respectively.

For example, one subframe may be called a transmission time interval (TTI), a plurality of consecutive subframes may be called a TTI, and one slot or one minislot may be called a TTI. That is, at least one of the subframe or the TTI may be a subframe (1 ms) in the existing LTE, a period shorter than 1 ms (for example, 1 to 13 symbols), or a period longer than 1 ms. Note that a unit representing the TTI may also be called a slot, a minislot, or the like, instead of a subframe.

Here, the TTI refers to a minimum time unit of scheduling in radio communication, for example. For example, in the LTE system, a base station performs scheduling to allocate radio resources (frequency bandwidth, transmission power, or the like that can be used in each user terminal) to each user terminal in units of TTI. Note that the definition of the TTI is not limited thereto.

The TTI may be a transmission time unit such as a channel-coded data packet (transport block), a code block, or a codeword, or may be a processing unit such as scheduling or link adaptation. Note that, when a TTI is given, a time interval (for example, the number of symbols) in which a transport block, a code block, a codeword, or the like is actually mapped may be shorter than the TTI.

Note that, in a case where one slot or one minislot is called a TTI, one or more TTIs (that is, one or more slots or one or more minislots) may be a minimum time unit of scheduling. Further, the number of slots (the number of minislots) constituting the minimum time unit of the scheduling may be controlled.

A TTI having a time length of 1 ms may be called an ordinary TTI (TTI in LTE Rel. 8 to 12), a normal TTI, a long TTI, a normal subframe, a long subframe, a slot, or the like. A TTI shorter than the ordinary TTI may be called a shortened TTI, a short TTI, a partial or fractional TTI, a short subframe, a minislot, a subslot, a slot, or the like.

Note that the long TTI (for example, the ordinary TTI or the subframe) may be read as a TTI having a time length exceeding 1 ms, and the short TTI (for example, the shortened TTI) may be read as a TTI having a TTI length of less than the TTI length of the long TTI and equal to or more than 1 ms.

The resource block (RB) is a resource allocation unit in the time domain and the frequency domain, and may include one or a plurality of consecutive subcarriers in the frequency domain. The number of subcarriers included in the RB may be the same regardless of the numerology, for example, twelve. The number of subcarriers included in the RB may be determined based on the numerology.

Further, the time domain of the RB may include one or a plurality of symbols, and may have a length of one slot, one minislot, one subframe, or one TTI. One TTI, one subframe, or the like may be configured with one or a plurality of resource blocks.

Note that one or a plurality of RBs may also be called physical resource blocks (PRB), subcarrier groups (SCG), resource element groups (REG), PRB pairs, RB pairs, or the like.

Further, the resource block may also be configured with one or a plurality of resource elements (RE). For example, one RE may be a radio resource region of one subcarrier and one symbol.

The bandwidth part (BWP) (which may also be called a partial bandwidth, or the like) may represent a certain subset of continuous common resource blocks (RBs) for the numerology in a certain carrier. Here, the common RB may be specified by an RB index based on a common reference point of the carrier. The PRB may be defined in a certain BWP and numbered within the BWP.

The BWP may include a BWP (UL BWP) for UL and a BWP (DL BWP) for DL. One or a plurality of BWPs may be configured in one carrier for a UE.

At least one of the configured BWPs may be active, and the UE does not have to expect to transmit and receive a predetermined signal/channel outside the active BWP. Note that "cell", "carrier", and the like in the present disclosure may be read as "BWP".

The above-described structures such as a radio frame, a subframe, a slot, a minislot, and a symbol are merely examples. For example, the configuration such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, and a cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and nonexhaustive examples, by using electromagnetic energy having wavelengths in the radio frequency domain, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

A term "means" in the configuration of each device described above may be replaced with a term such as "unit", "circuit", or "device".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in any other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

The term "determining" used in the present disclosure may encompass a wide variety of operations. The term "determining" can include, for example, judging, calculating, computing, processing, deriving, investigating, looking up, search, inquiry (for example, searching in a table, database, or other data structure), and ascertaining. In addition, "determining" can include receiving (for example, receiving information), transmitting (for example, transmitting information), inputting, outputting, and accessing (for example, accessing data in a memory), and the like. In addition, "determining" can include "resolving", "selecting", "choosing", "establishing", "comparing", and the like. In other words, the term "determining" can include any operation. Further, the term "determining" may also be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 E-UTRAN
30 NG RAN
100A eNB
100B gNB
110 Radio transmitting unit
120 Radio receiving unit
130 Report processing unit
140 Inter-node message processing unit
150 Control unit
160 Radio transmitting unit
170 Radio receiving unit
180 Inter-node message processing unit
190 Control unit
200 UE
210 Radio transmitting unit
220 Radio receiving unit
230 Quality measurement unit
240 Failure monitoring unit
250 Control unit
1001 Processor
1002 Memory
1003 Storage
1004 Communication device
1005 Input device
1006 Output device
1007 Bus

## Claims

1. A radio base station comprising:
a control unit that performs dual connectivity with a terminal that supports a first radio access technology and a second radio access technology;
a receiving unit that receives a report that the terminal has from the terminal during the dual connectivity; and
a transmitting unit that transmits, to the terminal, a message including designation information that designates at least one of the first radio access technology or the second radio access technology as a transmission target of the report.

2. The radio base station according to claim 1, wherein the receiving unit receives, from the terminal, type information indicating to which one of the first radio access technology or the second radio access technology the report is related, and
the control unit determines at least one of the first radio access technology or the second radio access technology as the transmission target of the report based on the type information.

3. The radio base station according to claim 1, wherein the transmitting unit transmits availability information indicating that the terminal has the report related to the second radio access technology to another radio base station that performs the dual connectivity.

4. The radio base station according to claim 3, wherein the receiving unit receives, from the another radio base station, bearer information indicating a radio bearer to be used for forwarding of the report from the radio base station to the another radio base station, and
the transmitting unit transmits the report to the another radio base station by using the radio bearer determined based on the bearer information.

5. A terminal comprising:
a control unit that performs dual connectivity with a radio base station by using a first radio access technology and a second radio access technology; and
a transmitting unit that transmits, to at least one of the radio base station or another radio base station that performs the dual connectivity, type information indicating to which one of the first radio access technology or the second radio access technology a report that the terminal has is related.
